# FASCICULE DE BREVET EUROPEEN

(11) **EP 4 258 863 B1**
(45) Date de publication et mention de la délivrance du brevet: **09.10.2024**
(21) Numéro de dépôt: 21835666.5
(22) Date de dépôt: 07.12.2021
(51) Int. Cl.: A01K 1/06

(54) **CORNADIS**
SELBSFANG-FRESSGITTER
SELF CATCHING FODDER GATE

(30) Priorité: 09.12.2020 FR 2012900; 28.09.2021 FR 2110211
(43) Date de publication de la demande: 18.10.2023
(73) Titulaire: Fournier, Nicolas, 52190 Esnoms au Val (FR)
(72) Inventeur: Fournier, Nicolas, 52190 Esnoms au Val (FR)
(74) Mandataire: Oudin, Stéphane
(86) Numéro de dépôt international: PCT/EP2021/084661
(87) Numéro de publication internationale: WO 2022/122767

(56) Documents cités:
- DE-A1- 3 237 211
- DE-A1- 4 217 415
- FR-A1- 2 776 891
- GB-A- 635 640

## Description

### Domaine technique de l'invention

La présente invention se rapporte au domaine général de l'agriculture et notamment de l'élevage de bovins, d'ovins, ou de caprins. Elle vise plus précisément un dispositif destiné à limiter les mouvements d'un animal qui est en train de manger.

### Etat de la technique

Dans l'élevage de bovins notamment, il est connu d'utiliser des dispositifs, appelés cornadis, installés devant une auge et destinés à limiter les mouvements d'un animal qui est en train de manger. De manière classique, dans les cornadis connus, l'immobilisation de l'animal s'obtient par l'abaissement de sa tête dans un cadre constitué, d'une part, par une colonne du portique de stalle et, d'autre part, par un organe à balancier guidé librement sur le longeron supérieur dudit portique et monté de manière à pouvoir pivoter dans le plan de l'ouverture correspondante du portique grâce à une tringlerie de commande, de telle manière que sa partie supérieure s'écarte de ladite colonne du portique alors que sa partie inférieure s'en rapproche.

Ces cornadis connus sont notamment décrits dans les demandes de brevet allemands DE 42 17 415 et DE 32 37 211, anglais GB 635 640 et français FR 2 776 891.

Ces cornadis connus sont certes efficaces mais présentent un certains nombres d'inconvénients. Tout d'abord, ils ne respectent pas les mouvements naturels de l'animal, ce dernier devant lever sa tête pour l'engager dans l'espace délimité par la colonne du portique de stalle, l'organe à balancier et le longeron supérieur. Enfin, ces cornadis peuvent être dangereux pour l'animal, car ce dernier peut coincer son cou entre la colonne du portique de stalle et l'organe à balancier formant un V et finir par se blesser voire s'étrangler.

### Résumé de l'invention

Le but de la présente invention est donc de proposer une alternative aux cornadis connus qui soit pérenne, solide et facile à mettre en oeuvre tout en étant sans risque pour l'animal et en respectant les mouvements naturels dudit animal.

Conformément à l'invention, il est donc proposé un cornadis comprenant une pluralité de portiques plans verticaux agencés pour être disposés en enfilade les uns à côté des autres le long d'une auge d'une étable, chaque portique comprenant un premier montant vertical étant agencé pour être fixé par rapport au sol par son extrémité inférieure, une traverse supérieure s'étendant globalement perpendiculairement dudit premier montant depuis son extrémité supérieure, un deuxième montant vertical s'étendant en direction du sol depuis l'extrémité libre de ladite traverse supérieure et une traverse médiane s'étendant globalement parallèlement à ladite traverse supérieure depuis l'extrémité inférieure dudit deuxième montant selon une direction opposée audit premier montant, l'extrémité de ladite traverse médiane opposée audit deuxième montant étant fixée sur le premier montant d'un portique adjacent ou sur l'extrémité supérieur d'un poteau d'extrémité, et détermine avec le sol et un portique adjacent ou poteau d'extrémité, un espace interne en forme de L,
- une trappe associée à chaque portique et obturant ou non au moins la partie latérale inférieure dudit espace, chaque trappe comprenant une structure plane disposée sous la traverse médiane du portique associé et étant configurée pour que ses hauteur et largeur soient strictement inférieures respectivement à la distance entre le dessous de ladite traverse médiane et le sol, et la longueur de ladite traverse médiane, et étant associée à des moyens de liaison permettant de solidariser la structure à la traverse médiane du portique associé, de faire pivoter ladite structure autour de l'axe longitudinal de ladite traverse médiane et de faire coulisser ladite structure le long dudit axe longitudinal, et
- des moyens de blocage exclusivement mécaniques pour faire passer le cornadis de sa position "accès", dans laquelle chaque trappe peut au moins pivoter en direction de l'avant et de l'arrière du portique associé autour d'un axe globalement horizontal, à sa position "blocage", dans laquelle ledit pivotement est bloqué au moins en direction l'arrière dudit portique, et inversement.

Conformément à l'invention, il est donc proposé une variante de réalisation d'un cornadis comprenant une pluralité de portiques plans verticaux agencés pour être disposés en enfilade les uns à côté des autres le long d'une auge d'une étable, chaque portique comportant au moins :
- un premier montant vertical agencé pour être fixé au sol par son extrémité inférieure,
- une traverse supérieure s'étendant globalement perpendiculairement dudit premier montant depuis l'extrémité supérieure de ce dernier, l'extrémité de ladite traverse supérieure opposée audit premier montant étant fixée sur le premier montant d'un portique adjacent ou sur l'extrémité supérieur d'un poteau d'extrémité,
- une première traverse médiane s'étendant dans la même direction et globalement parallèlement à ladite traverse supérieure depuis ledit premier montant,
- un deuxième montant vertical s'étendant en direction du sol, avantageusement sur une hauteur sensiblement égale à la moitié de la hauteur dudit premier montant, et monté coulissant sur ladite traverse supérieure, et
- une deuxième traverse médiane s'étendant globalement parallèlement à ladite traverse supérieure depuis l'extrémité inférieure dudit deuxième montant en direction dudit premier montant, ladite deuxième traverse médiane étant monté coulissante sur la première traverse médiane, cette dernière étant conformée pour s'insérer coaxialement dans ladite deuxième traverse médiane et détermine avec le sol et un portique adjacent ou poteau d'extrémité, un espace interne en forme de L,
- une trappe associée à chaque portique obturant ou non au moins la partie latérale inférieure dudit espace, chaque trappe comprenant une structure plane disposée sous la deuxième traverse médiane du portique associé et étant configurée pour que ses hauteur et largeur soient strictement inférieures respectivement à la distance entre le dessous de ladite deuxième traverse médiane et le sol, et la longueur de ladite deuxième traverse médiane, et étant montée pivotante sur le bord inférieur de ladite deuxième traverse médiane, et
- des moyens de blocage exclusivement mécaniques pour faire passer le cornadis de sa position "accès", dans laquelle chaque trappe peut au moins pivoter en direction de l'avant et de l'arrière du portique associé autour d'un axe globalement horizontal, à sa position "blocage", dans laquelle ledit pivotement est bloqué au moins en direction l'arrière dudit portique et inversement.

Les moyens de liaison comportent de préférence au moins un premier anneau fixé sur le dessus de la structure et disposé autour de la traverse médiane du portique associé, le diamètre interne dudit premier anneau étant strictement supérieur au diamètre externe de ladite traverse médiane.

Les moyens de liaison comportent avantageusement un deuxième anneau identique audit premier anneau et étant disposé du côté du deuxième montant du portique associé et en ce que les premier et deuxième anneaux sont chacun avantageusement constitués par deux demi-anneaux assemblés entre eux.

De manière avantageuse, les moyens de blocage comportent au moins :
- un levier de commande pivotant autour d'un axe horizontal perpendiculaire à l'enfilade de portiques,
- une barre globalement horizontale disposée le long des portiques, solidaire par une de ses extrémités de l'extrémité inférieure dudit levier de commande et mobile en translation le long de son axe longitudinal,
- une pluralité de bras globalement verticaux et fixés par leur extrémité inférieure le long de la barre, chaque bras étant solidaire de manière amovible de la trappe d'un des portiques, et
- une butée agencée pour être fixée sur le sol du côté arrière de chaque portique sensiblement à l'aplomb du deuxième montant de ce dernier.

L'extrémité supérieure de chaque bras est de préférence munie d'un crochet apte à pivoter pour venir coopérer avec le dessus du premier anneau, le crochet étant associé à un ressort de torsion tendant à maintenir la coopération entre ledit crochet et le dessus dudit premier anneau.

Selon un mode de réalisation avantageux, le cornadis comporte une plaque agencée pour être fixée sur le sol de l'étable le long de l'auge et sur laquelle sont fixés les portiques, le poteau d'extrémité et les moyens de blocage.

De manière avantageuse, les moyens de blocage comportent au moins :
- un levier de commande pivotant autour d'un axe vertical parallèle à l'enfilade de portiques,
- une barre globalement horizontale disposée le long des portiques au niveau de la traverse supérieure, solidaire par une de ses extrémités à l'une des extrémités dudit levier de commande et mobile en translation le long de son axe longitudinal,
- une pluralité de bras fixés par l'une de leurs extrémités le long de la barre, chaque bras étant solidaire de manière amovible par son autre extrémité au deuxième montant d'un des portiques, et
- une butée agencée pour être fixée par rapport au sol, ou le cas échéant sur la barre inférieure, du côté arrière de chaque portique.

Selon un mode de réalisation avantageux, le cornadis comporte une plaque agencée pour être fixée sur le sol de l'étable le long de l'auge et sur laquelle sont fixés les portiques et le poteau d'extrémité.

### Brève description des figures

D'autres avantages et caractéristiques ressortiront mieux de la description qui va suivre d'un mode d'exécution de l'invention en référence aux figures annexées sur lesquelles :
[Fig 1] est une vue de la face avant d'un cornadis selon l'invention muni d'une pluralité de portiques en position "accès",
[Fig 2] est une vue de la face avant de la pluralité de portiques de la figure 1 en position "blocage",
[Fig 3] est une vue partielle agrandie d'un portique de la figure 1 avec une vue de détail agrandie,
[Fig 4] est une vue de coupe verticale partielle selon l'axe IV - IV' de la figure 3,
[Fig 5] est une vue partielle d'un cornadis de la figure 3 avec un bovin engagé dans un portique représenté sans la trappe,
[Fig 6] est une vue de la face avant d'une variante de réalisation du cornadis selon l'invention muni d'une pluralité de portiques en position "accès",
[Fig 7] est une vue de la face avant de la pluralité de portiques de la figure 6 en position "blocage",
[Fig 8] est une vue partielle agrandie d'un portique de la figure 6 avec une vue de détail agrandie,
[Fig 9] est une vue en perspective agrandie d'une partie des moyens de blocage de la pluralité de portiques de la figure 6.

### Description des modes de réalisation

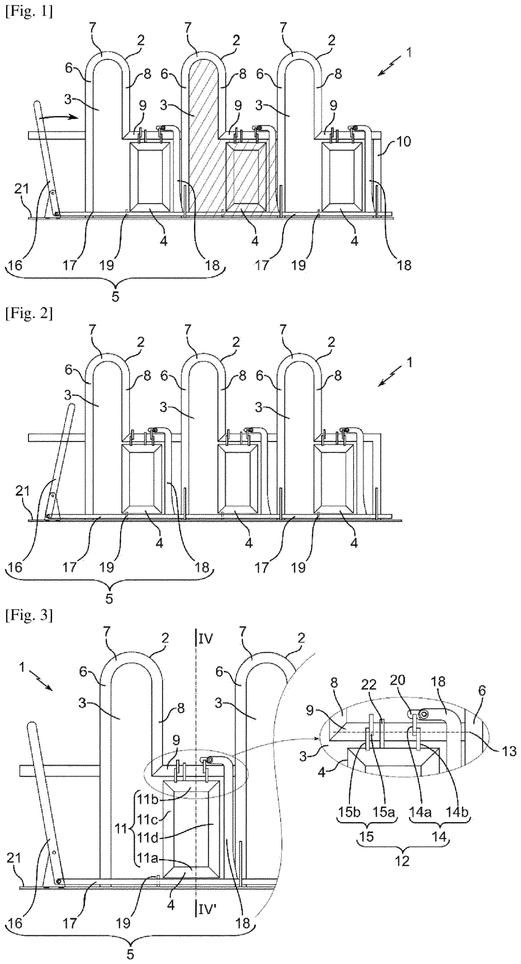

Sur les figures 1 à 4, on a représenté un cornadis 1 selon l'invention mis en place dans une étable, non représentée, pour l'alimentation d'animaux d'élevage tels que, par exemple, des bovins.

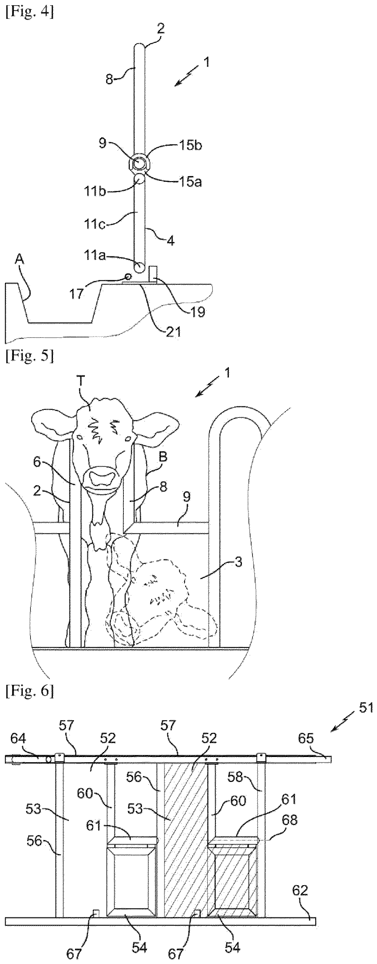

Ledit cornadis 1 comporte une pluralité de portiques 2 plans verticaux disposés en enfilade les uns à côté des autres et étant chacun agencé pour être fixé par rapport au sol de l'étable le long d'une auge A (Cf. figure 4), et pour déterminer avec le sol et un portique 2 adjacent un espace 3 interne en forme de L, une trappe 4 associée à chacun desdits portiques 2 et étant mobile par rapport à ce dernier pour obturer ou non au moins une partie ledit espace 3, et des moyens de blocage 5 pour faire passer le cornadis 1 de sa position "accès" à sa position "blocage" et inversement.

On désigne ici par "portique plan" ou "structure plane" un portique ou une structure dont les axes longitudinaux des éléments constitutifs sont tous coplanaires. Dans ce cas présent, les axes longitudinaux des éléments constitutifs de chaque portique 2 appartiennent tous à un même plan vertical.

De plus, on entend ici par "fixé par rapport au sol" le fait qu'un élément ou une partie d'un élément du cornadis 1 selon l'invention est fixé soit directement sur le sol, soit indirectement sur une ossature fixée elle-même sur le sol et telle que, par exemple, un muret ou encore une barre.

Chaque portique 2 comprend un premier montant 6 vertical agencé pour être fixé au sol (par son extrémité inférieure), une traverse supérieure 7 s'étendant globalement perpendiculairement dudit premier montant 6 depuis l'extrémité supérieure de ce dernier, un deuxième montant 8 vertical s'étendant en direction du sol depuis l'extrémité libre de ladite traverse supérieure 7, avantageusement sur une hauteur sensiblement égale à la moitié de la hauteur dudit premier montant 6, et une traverse médiane 9 s'étendant globalement parallèlement à ladite traverse supérieure 7 depuis l'extrémité inférieure dudit deuxième montant 8 selon une direction opposée audit premier montant 6, l'extrémité de ladite traverse médiane 9 opposée audit deuxième montant 8 étant fixée sur le premier montant 6 d'un portique 2 adjacent ou sur l'extrémité supérieur d'un poteau d'extrémité 10.

On désigne ici par "poteau d'extrémité" un poteau, avantageusement vertical, agencé pour être fixé au sol (par son extrémité inférieure) et disposé à l'extrémité de l'enfilade de portiques 2 du cornadis 1 (Cf. figure 1 ou 2).

De même, on désigne ici par "globalement perpendiculaire(ment)" ou "globalement parallèle(ment)" deux éléments ou parties d'éléments du cornadis 1 selon l'invention faisant un angle entre eux respectivement compris entre 70 et 110 degrés et entre 0 et 20 degrés.

Les éléments constitutifs de chaque portique 2, à savoir le premier montant 6, la traverse supérieure 7, le deuxième montant 8 et la traverse médiane 9, sont avantageusement des tubes métalliques assemblés par soudage. De même, pour des raisons décrites plus loin, la traverse supérieure 7 est avantageusement incurvée vers le haut.

Il va de soi que les éléments constitutifs de chaque portique 2 pourront être d'un tout autre type tel que, par exemple, des barres pleines ou encore des profilés en I ou H, sans sortir du cadre de la présente invention.

On comprend bien qu'avec la configuration spécifique de ces différents éléments constitutifs précédemment décrits, chaque portique 2 détermine bien, entre lesdits éléments constitutifs, le portique 2 adjacent et le sol, un espace 3 interne en forme de L représenté par une zone hachurée sur la figure 1.

Le cornadis 1 selon l'invention comporte en outre une trappe 4 mobile associée à chacun desdits portiques 2. Ladite trappe 4 comprend une structure 11 plane en forme générale de quadrilatère, avantageusement en forme de rectangle, disposée au droit de la partie latérale inférieure de l'espace 3 interne, à savoir sous la traverse médiane 9 du portique 2 associé, ladite structure 11 étant configurée pour que ses hauteur et largeur soient strictement inférieures respectivement à la distance entre le dessous de ladite traverse médiane 9 et le sol, et la longueur de ladite traverse médiane 9.

A l'instar de chaque portique 2 et en référence à la figure 3, les éléments constitutifs de ladite structure 11, à savoir une traverse inférieure 11a horizontale, une traverse supérieure 11b horizontale et un premier montant 11c vertical disposé du côté du premier montant 6 du portique2 associé et un deuxième montant 1 1d vertical situé du côté opposé, sont avantageusement des tubes métalliques assemblés par soudage, mais ils pourront toutefois être d'un tout autre type.

Par ailleurs, en référence à la figure 3, la trappe 4 est associée à des moyens de liaison 12 permettant de solidariser la structure 11 à la traverse médiane 9 du portique 2 associé, de faire pivoter ladite structure 11 autour de l'axe longitudinal 13 de ladite traverse médiane 9 et de faire coulisser ladite structure 11 le long dudit axe longitudinal 13. Compte tenu de la configuration spécifique des différents éléments constitutifs de chaque portique 2, on comprend bien que l'axe longitudinal 13 de la traverse médiane 9 est globalement horizontal. Pour cela, les moyens de liaison 12 comportent un premier anneau 14 et un deuxième anneau 15 fixés, de manière espacée, sur le dessus de la structure 11, à savoir sur sa traverse supérieure 11b, et disposés autour de la traverse médiane 9 du portique 2 associé, ledit deuxième anneau 15 étant disposé du côté du deuxième montant 8 du portique 2 associé. Pour permettre le coulissement de la structure 11 le long de l'axe longitudinal 13 de la traverse médiane 9, on comprend bien que le diamètre interne de chacun des premier et deuxième anneaux 14,15 doit être strictement supérieur au diamètre externe de ladite traverse médiane 9.

Pour des raisons de facilité de mise en place et de maintenance, les premier et deuxième anneaux 14,15 sont chacun avantageusement constitués par deux demi-anneaux 14a,14b;15a,15b assemblés entre eux par tous moyens adaptés tels que, par exemple, des vis ou des boulons.

Les premier et deuxième anneaux 14,15 pourront également être réalisés à partir d'une chaîne ou d'un câble, sans sortir du cadre de la présente invention.

On comprend bien que, sans sortir du cadre de la présente invention, les moyens de liaison 12 pourront ne comporter qu'un premier anneau 14, ce dernier étant alors plus épais pour garantir un coulissement aisé de la structure 11 de la trappe 4 le long de l'axe longitudinal 13 de la traverse médiane 9 du portique 2 associé.

Le cornadis 1 selon l'invention comporte également des moyens de blocage 5 pour faire passer le cornadis 1 de sa position "accès", dans laquelle la structure 11 de chaque trappe 4 peut pivoter en direction de l'avant ou de l'arrière du cornadis 1 autour de l'axe longitudinal 13 de ladite traverse médiane 9 du portique 2 associé, à sa position "blocage", dans laquelle ledit pivotement de ladite structure 11 est bloqué au moins en direction l'arrière dudit cornadis 1, et inversement. Les moyens de blocage 5 sont exclusivement mécaniques.

On désigne ici par "exclusivement mécanique" le fait que les moyens de blocage 5 n'ont pas besoin d'énergie électrique, hydraulique ou encore pneumatique pour bloquer ou libérer le pivotement de la structure 11 de chaque trappe 4.

De même, on désigne ici par "avant" tout élément ou partie d'élément du cornadis se trouvant du côté de l'auge A et par "arrière" tout élément ou partie d'élément du cornadis se trouvant du côté opposé.

Pour cela, les moyens de blocage 5 comportent au moins :
- un levier de commande 16 pivotant autour d'un axe horizontal perpendiculaire à l'enfilade de portiques 2 du cornadis 1 selon l'invention,
- une barre 17 globalement horizontale disposée le long des portiques 2, solidaire par une de ses extrémités de l'extrémité inférieure dudit levier de commande 16 et mobile en translation le long de son axe longitudinal,
- une pluralité de bras 18 globalement verticaux et fixés par leur extrémité inférieure le long de la barre 17, chaque bras 18 étant solidaire de manière amovible par son extrémité supérieure aux moyens de liaison 12 de la trappe 4 d'un des portiques 2, et
- une butée 19 agencée pour être fixée par rapport au sol du côté arrière de chaque portique 2 sensiblement à l'aplomb du deuxième montant 8 de ce dernier.

On désigne ici par "globalement horizontal(e)" ou "globalement vertical(e)" un élément ou partie d'élément du cornadis selon l'invention faisant un angle avec respectivement l'horizontale et la verticale compris entre 0 et 20 degrés.

On comprend bien que les moyens de blocage 5 pourraient comporter en lieu et place, par exemple, du levier de commande 16 et/ou de la barre 17 un ensemble pignon - crémaillère associé à un volant ou un moteur ou encore un actionneur du type vérin. Toutefois, toutes ces solutions seraient plus complexes à fabriquer et à entretenir, et nécessiterait pour la plupart une source d'énergie.

Par ailleurs, sans sortir du cadre de la présente invention, les moyens de blocage 5 pourraient être tels que les butées 19 soient fixées sur la barre 17 et que chaque trappe 4 ne soient que pivotante autour de l'axe longitudinal 13 de la traverse médiane 9 du portique 2 associé.

Pour cela, l'extrémité supérieure de chaque bras 18 est munie d'un crochet 20 apte à pivoter pour venir coopérer avec le dessus du premier anneau 14, le crochet 20 étant associé à un ressort de torsion, non représenté, tendant à maintenir la coopération entre ledit crochet 20 et le dessus dudit premier anneau 14.

Il va de soi que les moyens de blocage 5 pourront comporter deux butées 19 disposées de part et d'autre de chaque portique 2, sans sortir du cadre de la présente invention.

Par ailleurs, chaque bras 18 a une forme générale de L inversé, afin de contourner la structure 11 de la trappe 4 associée et de ne pas empêcher son pivotement autour de l'axe longitudinal 13 de ladite traverse médiane 9 du portique 2 associé.

Ainsi, avec cette configuration des moyens de blocage 5, on procède de la manière suivante pour faire passer le cornadis 1 selon l'invention de sa position "accès représentée sur la figure 1 à sa position "blocage" représentée à la figure 2, dans laquelle la structure 11 de chaque trappe 4 ne peut plus pivoter autour de l'axe longitudinal 13 de ladite traverse médiane 9 du portique 2 associé au moins en direction de l'arrière du cornadis 1, il faut faire coulisser ladite structure 11 en direction du deuxième montant 8 du portique 2 associé.

Pour cela, il faut faire déplacer l'extrémité supérieure du levier de commande 16 des moyens de blocage 5 en direction des portiques 2 (Cf. flèche sur le figure 1). Cette action entraine la translation de l'ensemble barre 17 - bras 18 selon une direction opposée, mais également un coulissement, selon cette même direction opposée, de la structure 11 de chacune des trappes 4 grâce à la coopération du crochet 20 des bras 18 et de premier anneau 14 des moyens de liaison 13 des trappes 4. La structure 11 de chaque trappe 4 coulisse ainsi, le long de l'axe longitudinal 13 de la traverse médiane 9 du portique 2 associé, jusqu'à ce que le premier montant 11c vienne sensiblement à l'aplomb du deuxième montant 8 dudit portique 2, sa traverse inférieure 11a se trouvant alors au-delà de la butée 19 associée, ce qui a pour conséquence d'interdire tout pivotement de ladite structure 11 autour de l'axe longitudinal 13 de ladite traverse médiane 9 dudit portique 2 au moins en direction de l'arrière du cornadis 1.

Pour libérer le pivotement et faire repasser le cornadis 1 en position "accès", on procède à l'inverse en déplaçant l'extrémité supérieure du levier de commande 16 des moyens de blocage 5 dans la direction opposée aux portiques 2.

Par ailleurs, pour favoriser le prémontage et les réglages en atelier du cornadis 1 selon l'invention, ce dernier comporte une plaque 21 agencée pour être fixée sur le sol de l'étable le long de l'auge A et sur laquelle sont fixés les portiques 2, le poteau d'extrémité 10 et les moyens de blocage 5. Avec cette configuration avantageuse, lors de l'installation du cornadis 1 selon l'invention dans une étable, il suffira uniquement de mettre en place de organes de fixation tels que, par exemple, des ensembles vis - chevilles pour fixer la plaque 21 sur le sol.

Par ailleurs, en référence à la figure 3, les moyens de liaison 12 de chaque trappe 4 peuvent comporter une butée 22 fixée sur la traverse médiane 9 du portique 2 associé entre le premier anneau 14 et le deuxième montant 8 dudit portique 2 et destinée à limiter le coulissement de la structure 11 de ladite trappe 4 le long de l'axe longitudinal 13 de ladite traverse médiane 9.

On comprend bien que l'Homme du Métier n'aura aucune difficulté pour dimensionner chaque portique 2 et sa trappe 4 associée en fonction du type, de la race et des dimensions de l'animal utilisant le cornadis 1 selon l'invention.

En référence à la figure 5, pour accéder à l'auge A, un bovin B se présente devant l'arrière d'un portique 2 du cornadis 1 en position "accès" et incline naturellement son cou de manière à amener sa tête T sur le côté et au ras du sol (position représentée partiellement en pointillé sur la figure 5). Ensuite, le bovin B avance et sa tête T pousse la trappe 4 (qui n'est pas représentée pour faciliter la compréhension) vers l'avant dudit portique 2 de manière à passer au travers de la partie latérale inférieure de l'espace 3 interne, c'est-à-dire sous la traverse médiane 9 dudit portique 2. Enfin, le bovin B continue à avancer jusqu'à ce que ses épaules viennent en appui contre l'arrière des premier et deuxième montants 6,8 dudit portique 2 et relève son cou entre lesdits premier et deuxième montants 6,8. Une fois le bovin B dans cette position, on déplace le levier de commande 16 pour passer le cornadis 1 dans sa position "blocage" afin d'interdire le pivotement de la structure 11 de la trappe 4 associée vers l'arrière du cornadis 1 et par conséquent le recul dudit bovin B. Une fois le bovin B alimenté, on déplace le levier de commande 16 dans l'autre sens pour passer le cornadis 1 dans sa position "accès" et permettre au bovin B de se dégager du cornadis 1 selon l'invention.

On comprend bien que le cornadis 1 selon l'invention est particulièrement solide et facile à mettre en oeuvre tout en étant sans risque pour l'animal et en respectant les mouvements naturels dudit animal. En effet, une fois le cornadis 1 en position "blocage", le bovin B est libre de lever ou baisser naturellement son cou dans l'axe de son corps, sans risque de coincer ce dernier entre des éléments du portique 2. Par ailleurs, comme décrit précédemment, la traverse supérieure 7 de chaque portique 2 est avantageusement incurvée vers le haut pour épouser la forme du dessus du cou du bovin B et éviter tout risque de blessure.

On comprend bien que le cornadis 1 selon l'invention est particulièrement bien adapté à fonctionnement naturel d'un animal d'élevage tel que, par exemple, un bovin, puisque la vision optimale d'un tel animal se situe dans un carré d'un mètre de côté posé sur le sol devant lui.

De manière avantageuse, selon une autre variante de réalisation non représenté, le cornadis 1 selon 'l'invention est fixé sur un muret d'une hauteur de l'ordre de 50 cm de sorte à laisser un espace suffisant jusqu'à l'épaule de l'animal, soit environ 1 m du sol. Un tel espace est alors suffisamment grand pour que l'animal puisse y facilement passer sa tête, sans risque de voir l'animal trop s'avancer et se bloquer dans ledit cornadis 1. Ces dimensions, qui correspondent à des bovins adultes, sont données à titre d'exemple et pourront être adaptées sans difficulté par l'Homme du Métier en fonction du type, de la race et des dimensions de l'animal utilisant le cornadis 1 selon l'invention.

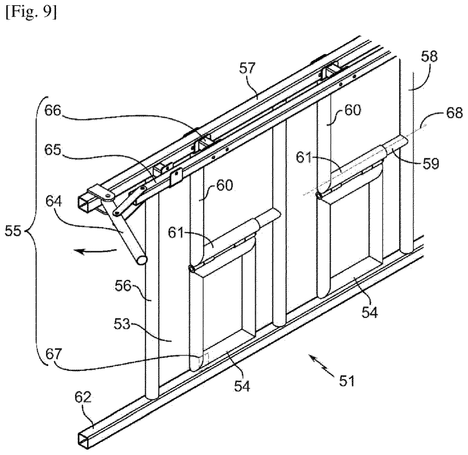

Selon une dernière variante de réalisation représentée aux figures 6 à 9, le dispositif de protection 51 est semblable au dispositif de protection 1 précédemment décrit et comporte une pluralité de portiques 52 plans verticaux disposés en enfilade les uns à côté des autres et étant chacun agencé pour être fixé par rapport au sol de l'étable le long d'une auge, et pour déterminer avec le sol et un portique 52 adjacent un espace 53 interne en forme de L (Cf. zone hachurée de la figure 6), une trappe 54 associée à chacun desdits portiques 52 et étant mobile par rapport à ce dernier pour obturer ou non au moins une partie ledit espace 53, et des moyens de blocage 55 pour faire passer le cornadis 1 de sa position "accès" à sa position "blocage" et inversement.

On désigne ici par "portique plan" ou "structure plane" un portique ou une structure dont les axes longitudinaux des éléments constitutifs sont tous coplanaires. Dans ce cas présent, les axes longitudinaux des éléments constitutifs de chaque portique 52 appartiennent tous à un même plan vertical.

De plus, on entend ici par "fixé par rapport au sol" le fait qu'un élément ou une partie d'un élément du cornadis 51 selon l'invention est fixé soit directement sur le sol, soit indirectement sur une ossature fixée elle-même sur le sol et telle que, par exemple, un muret ou encore une barre.

Chaque portique 52 comprend au moins :
- un premier montant 56 vertical agencé pour être fixé au sol par son extrémité inférieure,
- une traverse supérieure 57 s'étendant globalement perpendiculairement dudit premier montant 56 depuis l'extrémité supérieure de ce dernier, l'extrémité de ladite traverse supérieure 57 opposée audit premier montant 56 étant fixée sur le premier montant 56 d'un portique 52 adjacent ou sur l'extrémité supérieur d'un poteau d'extrémité 58,
- une première traverse médiane 59 s'étendant dans la même direction et globalement parallèlement à ladite traverse supérieure 57 depuis ledit premier montant 56,
- un deuxième montant 60 vertical s'étendant en direction du sol, avantageusement sur une hauteur sensiblement égale à la moitié de la hauteur dudit premier montant 56, et monté coulissant sur ladite traverse supérieure 57, et
- une deuxième traverse médiane 61 s'étendant globalement parallèlement à ladite traverse supérieure 57 depuis l'extrémité inférieure dudit deuxième montant 60 en direction dudit premier montant 56, ladite deuxième traverse médiane 61 étant monté coulissante sur la première traverse médiane 59, cette dernière étant conformée pour s'insérer coaxialement dans ladite deuxième traverse médiane 61.

On désigne ici par "poteau d'extrémité" un poteau, avantageusement vertical, agencé pour être fixé au sol (par son extrémité inférieure) et disposé à l'extrémité de l'enfilade de portiques 52 du cornadis 51 (Cf. figure 6).

Par ailleurs, pour favoriser le prémontage et les réglages en atelier du cornadis 51 selon l'invention, ce dernier comporte une barre inférieure 62 agencée pour être fixée sur le sol de l'étable le long de l'auge et sur laquelle sont fixés les portiques 52 et le poteau d'extrémité 58.

De même, pour former la traverse supérieure 57 de chaque portique 52 du cornadis 51, on utilisera une seule et même barre.

Les éléments constitutifs de chaque portique 52, à savoir le premier montant 56, la traverse supérieure 57, la première traverse médiane 59, le deuxième montant 60 et la deuxième traverse médiane 61 sont avantageusement des tubes métalliques, et les ensembles "premier montant 56 - traverse supérieure 57 - première traverse médiane 59" et "deuxième montant 60 - deuxième traverse médiane 61" sont assemblés par soudage.

Il va de soi que les éléments constitutifs de chaque portique 52 pourront être d'un tout autre type tel que, par exemple, des barres pleines ou encore des profilés en I ou H, sans sortir du cadre de la présente invention.

On comprend bien qu'avec la configuration spécifique de ces différents éléments constitutifs précédemment décrits, chaque portique 52 détermine bien, entre lesdits éléments constitutifs, le portique 52 adjacent et le sol, un espace 53 interne en forme de L représenté par une zone hachurée sur la figure 6.

Le cornadis 51 selon l'invention comporte en outre une trappe 54 mobile associée à chacun desdits portiques 52. Ladite trappe 54 comprend une structure 63 plane en forme générale de quadrilatère, avantageusement en forme de rectangle, semblable à la structure 11 de la trappe 4 précédemment décrite, et disposée au droit de la partie latérale inférieure de l'espace 53 interne, à savoir sous la deuxième traverse médiane 61 du portique 52 associé, ladite structure 63 étant configurée pour que ses hauteur et largeur soient strictement inférieures respectivement à la distance entre le dessous de ladite deuxième traverse médiane 61 et le sol, et la longueur de ladite deuxième traverse médiane 61.

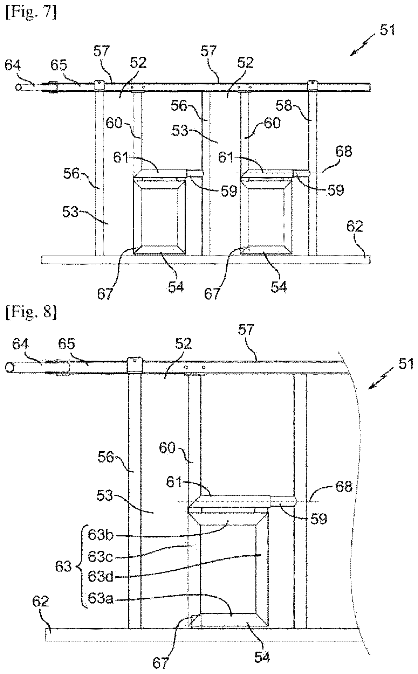

A l'instar de chaque portique 52 et en référence à la figure 8, les éléments constitutifs de ladite structure 63, à savoir une traverse inférieure 63a horizontale, une traverse supérieure 63b horizontale et un premier montant 63c vertical disposé du côté du premier montant 56 du portique52 associé et un deuxième montant 63d vertical situé du côté opposé, sont avantageusement des tubes métalliques assemblés par soudage, mais ils pourront toutefois être d'un tout autre type.

Par ailleurs, la trappe 54 est montée pivotante sur le bord inférieur de la deuxième traverse médiane 61 du portique 52 associé. Compte tenu de la configuration spécifique des différents éléments constitutifs de chaque portique 2, on comprend bien que la trappe 54 pivote donc autour d'un axe globalement horizontal.

Le cornadis 51 comporte également des moyens de blocage 55 pour faire passer le cornadis 51 de sa position "accès", dans laquelle la structure 63 de chaque trappe 4 peut pivoter en direction de l'avant et de l'arrière du cornadis 1, à sa position "blocage", dans laquelle ledit pivotement de ladite structure 62 est bloqué au moins en direction l'arrière dudit cornadis 51, et inversement. Les moyens de blocage 55 sont, comme les moyens de blocage 5 précédemment décrits, exclusivement mécaniques.

Pour cela, les moyens de blocage 55 comportent au moins :
- un levier de commande 64 pivotant autour d'un axe vertical parallèle à l'enfilade de portiques 52 du cornadis 51 selon l'invention,
- une barre 65 globalement horizontale disposée le long des portiques 52 au niveau de la traverse supérieure 57, solidaire par une de ses extrémités à l'une des extrémités dudit levier de commande 64 et mobile en translation le long de son axe longitudinal,
- une pluralité de bras 66 fixés par l'une de leurs extrémités le long de la barre 65, chaque bras 66 étant solidaire de manière amovible par son autre extrémité au deuxième montant 60 d'un des portiques 2, et
- une butée 67 agencée pour être fixée par rapport au sol, ou le cas échéant sur la barre inférieure 62, du côté arrière de chaque portique 52.

On comprend bien que les moyens de blocage 55 pourraient comporter en lieu et place, par exemple, du levier de commande 64 et/ou de la barre 65 un ensemble pignon - crémaillère associé à un volant ou un moteur ou encore un actionneur du type vérin. Toutefois, toutes ces solutions seraient plus complexes à fabriquer et à entretenir, et nécessiterait pour la plupart une source d'énergie.

Il va de soi que les moyens de blocage 55 pourront comporter deux butées 66 disposées de part et d'autre de chaque portique 2, sans sortir du cadre de la présente invention.

Ainsi, avec cette configuration des moyens de blocage 55, on procède de la manière suivante pour faire passer le cornadis 51 selon l'invention de sa position "accès représentée sur la figure 6 à sa position "blocage" représentée à la figure 7, dans laquelle la structure 63 de chaque trappe 54 ne peut plus pivoter au moins en direction de l'arrière du cornadis 51, il faut faire coulisser l'ensemble "deuxième montant 60 - deuxième traverse médiane 61 - trappe 54" en direction le premier montant 56 d'un portique 2 adjacent ou sur l'extrémité supérieur d'un poteau d'extrémité 58.

Pour cela, il faut faire déplacer l'extrémité supérieure du levier de commande 64 des moyens de blocage 55 en direction opposée des portiques 2 (Cf. flèche sur le figure 1). Cette action entraine la translation de l'ensemble barre 65 - bras 66 selon la même direction, mais également un coulissement, selon cette même direction, des ensembles "deuxième montant 60 - deuxième traverse médiane 61 - trappe 54". Chaque trappe 54 coulisse ainsi, le long de l'axe longitudinal 68 des première et deuxième traverses médianes 59, 61 du portique 2 associé, jusqu'à ce que le premier montant 63c se trouve alors au-delà de la butée 67 associée, ce qui a pour conséquence d'interdire tout pivotement de ladite structure 63 au moins en direction de l'arrière du cornadis 51.

Pour libérer le pivotement et faire repasser le cornadis 51 en position "accès", on procède à l'inverse en déplaçant l'extrémité supérieure du levier de commande 64 des moyens de blocage 55 dans la direction des portiques 2.

On comprend qu'avec cette dernière variante de réalisation du cornadis 51, l'espace entre les premier et deuxième montants 56, 60 verticaux est variable, ledit espace étant maximal, lorsque le cornadis 51 est en position "accès", et permettant alors le passage d'un homme. Cette configuration avantageuse permet notamment à l'éleveur de s'introduire dans le cornadis 51 pour accéder au lieu de vie de l'animal ou inversement.

Pour permettre aux cornadis 1, 51 selon l'invention de respecter les mouvements de l'animal, chaque trappe 4, 54 peut au moins pivoter en direction de l'avant, mais également et de l'arrière du portique 2, 52 associé autour d'un axe globalement horizontal.

On comprend bien que sans sortir du cadre de la présente invention, chaque portique 5, 52 pour être orienté de façon symétrique à celles décrites précédemment de manière à déterminer avec le sol et un portique 2, 52 adjacent ou poteau d'extrémité 10, 58, un espace 3, 53 interne en forme de J.

Le cornadis 1 selon l'invention est particulièrement destiné aux bovins, mais il pourra également être utilisés pour l'élevage d'autres animaux tels que, par exemple, les ovins ou les caprins.

Enfin, il va de soi que les exemples de cornadis 1 conformes à l'invention qui viennent d'être décrits ne sont que des illustrations particulières, en aucun cas limitatives de l'invention.

## Revendications

1. Cornadis (1) comprenant une pluralité de portiques (2) plans verticaux agencés pour être disposés en enfilade les uns à côté des autres le long d'une auge (A) d'une étable, chaque portique (2) comprenant un premier montant (6) vertical étant agencé pour être fixé par rapport au sol par son extrémité inférieure, une traverse supérieure (7) s'étendant globalement perpendiculairement dudit premier montant (6) depuis son extrémité supérieure, un deuxième montant (8) vertical s'étendant en direction du sol depuis l'extrémité libre de ladite traverse supérieure (7) et une traverse médiane (9) s'étendant globalement parallèlement à ladite traverse supérieure (7) depuis l'extrémité inférieure dudit deuxième montant (8) selon une direction opposée audit premier montant (6), l'extrémité de ladite traverse médiane (9) opposée audit deuxième montant (8) étant fixée sur le premier montant (6) d'un portique (2) adjacent ou sur l'extrémité supérieur d'un poteau d'extrémité (10), et détermine avec le sol et un portique (2) adjacent ou poteau d'extrémité (10), un espace (3) interne en forme de L,
- une trappe (4) associée à chaque portique (2) et obturant ou non au moins la partie latérale inférieure dudit espace (3), chaque trappe (4) comprenant une structure (11) plane disposée sous la traverse médiane (9) du portique (2) associé et étant configurée pour que ses hauteur et largeur soient strictement inférieures respectivement à la distance entre le dessous de ladite traverse médiane (9) et le sol, et la longueur de ladite traverse médiane (9), et étant associée à des moyens de liaison (12) permettant de solidariser la structure (11) à la traverse médiane (9) du portique (2) associé, de faire pivoter ladite structure (11) autour de l'axe longitudinal (13) de ladite traverse médiane (9) et de faire coulisser ladite structure (11) le long dudit axe longitudinal (13), et
- des moyens de blocage (5) exclusivement mécaniques pour faire passer le cornadis (1) de sa position "accès", dans laquelle chaque trappe (4) peut au moins pivoter en direction de l'avant et de l'arrière du portique (2) associé autour d'un axe globalement horizontal, à sa position "blocage", dans laquelle ledit pivotement est bloqué au moins en direction l'arrière dudit portique (2), et inversement.

2. Cornadis (51) comprenant une pluralité de portiques (52) plans verticaux agencés pour être disposés en enfilade les uns à côté des autres le long d'une auge (A) d'une étable, chaque portique (52) comportant au moins :
- un premier montant (56) vertical agencé pour être fixé au sol par son extrémité inférieure,
- une traverse supérieure (57) s'étendant globalement perpendiculairement dudit premier montant (56) depuis l'extrémité supérieure de ce dernier, l'extrémité de ladite traverse supérieure (57) opposée audit premier montant (56) étant fixée sur le premier montant (56) d'un portique (52) adjacent ou sur l'extrémité supérieur d'un poteau d'extrémité (58),
- une première traverse médiane (59) s'étendant dans la même direction et globalement parallèlement à ladite traverse supérieure (57) depuis ledit premier montant (56),
- un deuxième montant (60) vertical s'étendant en direction du sol, avantageusement sur une hauteur sensiblement égale à la moitié de la hauteur dudit premier montant (56), et monté coulissant sur ladite traverse supérieure (57), et
- une deuxième traverse médiane (61) s'étendant globalement parallèlement à ladite traverse supérieure (57) depuis l'extrémité inférieure dudit deuxième montant (60) en direction dudit premier montant (56), ladite deuxième traverse médiane (61) étant monté coulissante sur la première traverse médiane (59), cette dernière étant conformée pour s'insérer coaxialement dans ladite deuxième traverse médiane (61) et détermine avec le sol et un portique (52) adjacent ou poteau d'extrémité (58), un espace (53) interne en forme de L,
- une trappe (54) associée à chaque portique (52) obturant ou non au moins la partie latérale inférieure dudit espace (53), chaque trappe (54) comprenant une structure (63) plane disposée sous la deuxième traverse médiane (61) du portique (52) associé et étant configurée pour que ses hauteur et largeur soient strictement inférieures respectivement à la distance entre le dessous de ladite deuxième traverse médiane (61) et le sol, et la longueur de ladite deuxième traverse médiane (61), et étant montée pivotante sur le bord inférieur de ladite deuxième traverse médiane (61), et
- des moyens de blocage (55) exclusivement mécaniques pour faire passer le cornadis (51) de sa position "accès", dans laquelle chaque trappe (54) peut au moins pivoter en direction de l'avant et de l'arrière du portique (52) associé autour d'un axe globalement horizontal, à sa position "blocage", dans laquelle ledit pivotement est bloqué au moins en direction l'arrière dudit portique (2), et inversement.

3. Cornadis (1) selon la revendication 1 **caractérisé en ce que** les moyens de liaison (12) comportent au moins un premier anneau (14) fixé sur le dessus de la structure (11) et disposé autour de la traverse médiane (9) du portique (2) associé, le diamètre interne dudit premier anneau (14) étant strictement supérieur au diamètre externe de ladite traverse médiane (9).

4. Cornadis (1) selon la revendication 3 **caractérisé en ce que** les moyens de liaison (12) comportent un deuxième anneau (15) identique audit premier anneau (14) et étant disposé du côté du deuxième montant (8) du portique (2) associé et **en ce que** les premier et deuxième anneaux (14,15) sont chacun avantageusement constitués par deux demi-anneaux (14a, 14b; 15a, 15b) assemblés entre eux.

5. Cornadis (1) selon l'une quelconque des revendications 1, 3 ou 4 **caractérisé en ce que** les moyens de blocage (5) comportent au moins :
- un levier de commande (16) pivotant autour d'un axe horizontal perpendiculaire à l'enfilade de portiques (2),
- une barre (17) globalement horizontale disposée le long des portiques (2), solidaire par une de ses extrémités de l'extrémité inférieure dudit levier de commande (16) et mobile en translation le long de son axe longitudinal,
- une pluralité de bras (18) globalement verticaux et fixés par leur extrémité inférieure le long de la barre (17), chaque bras (18) étant solidaire de manière amovible de la trappe (4) d'un des portiques (2), et
- une butée (19) agencée pour être fixée sur le sol du côté arrière de chaque portique (2) sensiblement à l'aplomb du deuxième montant (8) de ce dernier.

6. Cornadis (1) selon les revendications 4 et 5 **caractérisé en ce que** l'extrémité supérieure de chaque bras (18) est munie d'un crochet (20) apte à pivoter pour venir coopérer avec le dessus du premier anneau (14), le crochet (20) étant associé à un ressort de torsion tendant à maintenir la coopération entre ledit crochet (20) et le dessus dudit premier anneau (14).

7. Cornadis (1) selon l'une quelconque des revendications 1, 3 à 7 **caractérisé en ce qu'**il comporte une plaque (21) agencée pour être fixée sur le sol de l'étable le long de l'auge (A) et sur laquelle sont fixés les portiques (2), le poteau d'extrémité (10) et les moyens de blocage (5).

8. Cornadis (51) selon la revendication 2 **caractérisé en ce que** les moyens de blocage (55) comportent au moins :
- un levier de commande (64) pivotant autour d'un axe vertical parallèle à l'enfilade de portiques (52),
- une barre (65) globalement horizontale disposée le long des portiques (52) au niveau de la traverse supérieure (57), solidaire par une de ses extrémités à l'une des extrémités dudit levier de commande (64) et mobile en translation le long de son axe longitudinal,
- une pluralité de bras (66) fixés par l'une de leurs extrémités le long de la barre (65), chaque bras (66) étant solidaire de manière amovible par son autre extrémité au deuxième montant (60) d'un des portiques (2), et
- une butée (67) agencée pour être fixée par rapport au sol, ou le cas échéant sur la barre inférieure (62), du côté arrière de chaque portique (52).

9. Cornadis (51) selon l'une quelconque des revendications 1 ou 8 **caractérisé en ce qu'**il comporte une plaque (62) agencée pour être fixée sur le sol de l'étable le long de l'auge et sur laquelle sont fixés les portiques (52) et le poteau d'extrémité (58).

## Patentansprüche

1. Futterbarriere (1), die eine Vielzahl von vertikalen, ebenen Rahmen (2) umfasst, die in einer Reihe nebeneinander entlang eines Trogs (A) in einem Stall angeordnet sind, wobei jeder Rahmen (2) einen ersten vertikalen Pfosten (6), der angeordnet ist, um an seinem unteren Ende am Boden befestigt zu werden, einen oberen Querträger (7), der sich im Allgemeinen von seinem oberen Ende senkrecht zu dem ersten Pfosten (6) erstreckt, einen zweiten vertikalen Pfosten (8), der sich vom freien Ende des oberen Querträgers (7) in Richtung des Bodens erstreckt, und einen mittleren Querträger (9) umfasst, der sich im Allgemeinen parallel zum oberen Querträger (7) vom unteren Ende des zweiten Pfostens (8) in einer Richtung gegenüber dem ersten Pfosten (6) erstreckt, wobei das Ende des mittleren Querträgers (9) gegenüber dem zweiten Pfosten (8) am ersten Pfosten (6) eines angrenzenden Rahmens (2) oder am oberen Ende eines Endpfostens (10) befestigt ist und mit dem Boden und einem angrenzenden Rahmen (2) oder einem Endpfosten (10) einen L-förmigen Innenraum (3) festlegt,
- eine Klappe (4), die mit jedem Rahmen (2) verbunden ist und mindestens den unteren seitlichen Teil des Raums (3) verschließt oder nicht, wobei jede Klappe (4) eine ebene Struktur (11) umfasst, die unterhalb des mittleren Querträgers (9) des verbundenen Rahmens (2) angeordnet und so konfiguriert ist, dass ihre Höhe und Breite jeweils strikt geringer sind als der Abstand zwischen der Unterseite des mittleren Querträgers (9) und dem Boden und die Länge des mittleren Querträgers (9), und Verbindungsmitteln (12) verbunden ist, die ermöglichen, die Struktur (11) mit dem mittleren Querträger (9) des verbundenen Rahmens (2) zu verbinden, um die Struktur (11) um die Längsachse (13) des mittleren Querträgers (9) herum zu schwenken und die Struktur (11) entlang der Längsachse (13) zu verschieben, und
- ausschließlich mechanische Blockiermittel (5), um die Futterbarriere (1) aus ihrer "Zugangsposition", in der jede Klappe (4) mindestens in Richtung der Vorderseite und der Rückseite des verbundenen Rahmens (2) um eine im Allgemeinen horizontale Achse geschwenkt werden kann, in ihre "Blockierposition", in der das Schwenken mindestens in Richtung der Rückseite des Rahmens (2) blockiert ist, zu bringen und umgekehrt.

2. Futterbarriere (51), die eine Vielzahl von vertikalen, ebenen Rahmen (52) umfasst, die in einer Reihe nebeneinander entlang eines Trogs (A) in einem Stall angeordnet sind, wobei jeder Rahmen (52) mindestens Folgendes umfasst:
- einen ersten vertikalen Pfosten (56), der angeordnet ist, um an seinem unteren Ende am Boden befestigt zu werden,
- einen oberen Querträger (57), der sich im Allgemeinen senkrecht von dem ersten Pfosten (56) bis zum oberen Ende des letzteren erstreckt, wobei das Ende des oberen Querträgers (57) gegenüber dem ersten Pfosten (56) am ersten Pfosten (56) eines angrenzenden Rahmens (52) oder am oberen Ende eines Endpfostens (58) befestigt ist,
- einen ersten mittleren Querträger (59), der sich in der gleichen Richtung und im Allgemeinen parallel zum oberen Querträger (57) vom ersten Pfosten (56) erstreckt,
- einen zweiten vertikalen Pfosten (60), der sich in Richtung des Bodens erstreckt, vorteilhafterweise über eine Höhe, die im Wesentlichen gleich der Hälfte der Höhe des ersten Pfostens (56) ist, und verschiebbar auf dem oberen Querträger (57) montiert ist, und
- einen zweiten mittleren Querträger (61), der sich im Allgemeinen parallel zum oberen Querträger (57) vom unteren Ende des zweiten Pfostens (60) in Richtung des ersten Pfostens (56) erstreckt, wobei der zweite mittlere Querträger (61) verschiebbar auf dem ersten mittleren Querträger (59) montiert ist, wobei letzterer ausgebildet ist, um koaxial in den zweiten mittleren Querträger (61) eingeführt zu werden, und mit dem Boden und einem angrenzenden Rahmen (52) oder einem Endpfosten (58) einen L-förmigen Innenraum (53) festlegt,
- eine Klappe (54), die mit jedem Rahmen (52) verbunden ist und mindestens den unteren seitlichen Teil des Raums (53) verschließt oder nicht, wobei jede Klappe (54) eine ebene Struktur (63) umfasst, die unterhalb des zweiten mittleren Querträgers (61) des zugehörigen Rahmens (52) angeordnet und so konfiguriert ist, dass ihre Höhe und Breite jeweils strikt geringer sind als der Abstand zwischen der Unterseite des zweiten mittleren Querträgers (61) und dem Boden und die Länge des zweiten mittleren Querträgers (61), und schwenkbar am unteren Rand des zweiten mittleren Querträgers (61) montiert ist, und
- ausschließlich mechanische Blockiermittel (55), um die Futterbarriere (51) aus ihrer "Zugangsposition", in der jede Klappe (54) mindestens in Richtung der Vorderseite und der Rückseite des verbundenen Rahmens (52) um eine im Allgemeinen horizontale Achse geschwenkt werden kann, in ihre "Blockierposition", in der das Schwenken mindestens in Richtung der Rückseite des Rahmens (2) blockiert ist, zu bringen und umgekehrt.

3. Futterbarriere (1) nach Anspruch 1, **dadurch gekennzeichnet, dass** die Verbindungsmittel (12) mindestens einen ersten Ring (14) umfassen, der an der Oberseite der Struktur (11) befestigt und um den mittleren Querträger (9) des verbundenen Rahmens (2) herum angeordnet ist, wobei der Innendurchmesser des ersten Rings (14) strikt größer als der Außendurchmesser des mittleren Querträgers (9) ist.

4. Futterbarriere (1) nach Anspruch 3, **dadurch gekennzeichnet, dass** die Verbindungsmittel (12) einen zweiten Ring (15) umfassen, der mit dem ersten Ring (14) identisch ist und auf der Seite des zweiten Pfostens (8) des verbundenen Rahmens (2) angeordnet ist, und dadurch, dass der erste und der zweite Ring (14, 15) vorteilhafterweise jeweils durch zwei halbe Ringe (14a, 14b; 15a, 15b), die zusammengefügt sind, ausgebildet sind.

5. Futterbarriere (1) nach einem der Ansprüche 1, 3 oder 4, **dadurch gekennzeichnet, dass** die Blockiermittel (5) mindestens Folgendes umfassen:
- einen Steuerhebel (16), der um eine horizontale Achse senkrecht zur Reihe der Rahmen (2) schwenkt,
- eine im Allgemeinen horizontale Stange (17), die entlang der Rahmen (2) angeordnet ist, mit einem ihrer Enden mit dem unteren Ende des Steuerhebels (16) verbunden ist und entlang ihrer Längsachse translatorisch beweglich ist,
- eine Vielzahl von im Allgemeinen vertikalen Armen (18), die an ihrem unteren Ende entlang der Stange (17) befestigt sind, wobei jeder Arm (18) abnehmbar mit der Klappe (4) eines der Rahmen (2) verbunden ist, und
- einen Anschlag (19), der angeordnet ist, um an der Rückseite jedes Rahmens (2) im Wesentlichen senkrecht unterhalb des zweiten Pfostens (8) des letzteren am Boden befestigt zu werden.

6. Futterbarriere (1) nach den Ansprüchen 4 und 5, **dadurch gekennzeichnet, dass** das obere Ende jedes Arms (18) mit einem Haken (20) ausgestattet ist, der zum Schwenken ausgelegt ist, um mit der Oberseite des ersten Rings (14) zusammenzuwirken, wobei der Haken (20) mit einer Torsionsfeder verbunden ist, die darauf abzielt, das Zusammenwirken zwischen dem Haken (20) und der Oberseite des ersten Rings (14) aufrechtzuerhalten.

7. Futterbarriere (1) nach einem der Ansprüche 1, 3 bis 7, **dadurch gekennzeichnet, dass** sie eine Platte (21) umfasst, die angeordnet ist, um entlang des Trogs (A) am Boden des Stalls befestigt zu werden, und an der die Rahmen (2), der Endpfosten (10) und die Blockiermittel (5) befestigt sind.

8. Futterbarriere (51) nach Anspruch 2, **dadurch gekennzeichnet, dass** die Blockiermittel (55) mindestens Folgendes umfassen:
- einen Steuerhebel (64), der um eine vertikale Achse parallel zur Reihe der Rahmen (52) schwenkt,
- eine im Allgemeinen horizontale Stange (65), die an dem oberen Querträger (57) entlang der Rahmen (52) angeordnet ist, mit einem ihrer Enden mit einem der Enden des Steuerhebels (64) verbunden ist und entlang ihrer Längsachse translatorisch beweglich ist,
- eine Vielzahl von Armen (66), die mit einem ihrer Enden entlang der Stange (65) befestigt sind, wobei jeder Arm (66) mit seinem anderen Ende abnehmbar mit dem zweiten Pfosten (60) eines der Rahmen (2) verbunden ist, und
- einen Anschlag (67), der angeordnet ist, um in Bezug auf den Boden, oder gegebenenfalls an der unteren Stange (62), auf der Rückseite jedes Rahmens (52) befestigt zu werden.

9. Futterbarriere (51) nach einem der Ansprüche 1 oder 8, **dadurch gekennzeichnet, dass** sie eine Platte (62) umfasst, die angeordnet ist, um entlang des Trogs am Boden des Stalls befestigt zu werden, und an der die Rahmen (52) und der Endpfosten (58) befestigt sind.

## Claims

1. A feed rack (1) comprising a plurality of vertical plane gantries (2) arranged to be disposed in a row next to each other along a trough (A) of a stable, each gantry (2) comprising a first vertical upright (6) being arranged to be fixed relative to the ground by its lower end, an upper crosspiece (7) extending generally perpendicular to said first upright (6) from its upper end, a second vertical upright (8) extending towards the ground from the free end of said upper crosspiece (7) and a middle crosspiece (9) extending generally parallel to said upper crosspiece (7) from the lower end of said second upright (8) in a direction opposite said first upright (6), the end of said middle crosspiece (9) opposite said second upright (8) being fixed on the first upright (6) of an adjacent gantry (2) or on the upper end of an end post (10), and determines with the ground and an adjacent gantry (2) or end post (10), an internal L-shaped space (3),
- a hatch (4) associated with each gantry (2) and closing or not at least the lower lateral part of said space (3), each hatch (4) comprising a flat structure (11) disposed under the middle crosspiece (9) of the associated gantry (2) and being configured so that its height and width are strictly less respectively than the distance between the underside of said middle crosspiece (9) and the ground, and the length of said middle crosspiece (9), and being associated with connecting means (12) allowing to secure the structure (11) to the middle crosspiece (9) of the associated gantry (2), to pivot said structure (11) around the longitudinal axis (13) of said middle crosspiece (9) and to slide said structure (11) along said longitudinal axis (13), and
- exclusively mechanical blocking means (5) to switch the feed rack (1) from its "access" position, wherein each hatch (4) can at least pivot towards the front and rear of the associated gantry (2) around a generally horizontal axis, to its "blocking" position, wherein said pivoting is blocked at least in the direction of the rear of said gantry (2), and vice versa.

2. A feed rack (51) comprising a plurality of vertical plane gantries (52) arranged to be disposed in a row next to each other along a trough (A) of a stable, each gantry (52) including at least:
- a first vertical upright (56) arranged to be fixed to the ground by its lower end,
- an upper crosspiece (57) extending generally perpendicular to said first upright (56) from the upper end of the latter, the end of said upper crosspiece (57) opposite said first upright (56) being fixed on the first upright (56) of an adjacent gantry (52) or on the upper end of an end post (58),
- a first middle crosspiece (59) extending in the same direction and generally parallel to said upper crosspiece (57) from said first upright (56),
- a second vertical upright (60) extending towards the ground, advantageously over a height substantially equal to half the height of said first upright (56), and slidably mounted on said upper crosspiece (57), and
- a second middle crosspiece (61) extending generally parallel to said upper crosspiece (57) from the lower end of said second upright (60) towards said first upright (56), said second middle crosspiece (61) being slidably mounted on the first middle crosspiece (59), the latter being shaped to be coaxially inserted into said second middle crosspiece (61) and determines with the ground and an adjacent gantry (52) or end post (58), an L-shaped internal space (53),
- a hatch (54) associated with each gantry (52) closing or not at least the lower lateral part of said space (53), each hatch (54) comprising a flat structure (63) disposed under the second middle crosspiece (61) of the associated gantry (52) and being configured so that its height and width are strictly less respectively than the distance between the underside of said second middle crosspiece (61) and the ground, and the length of said second middle crosspiece (61), and being pivotally mounted on the lower edge of said second middle crosspiece (61), and
- exclusively mechanical blocking means (55) to switch the feed rack (51) from its "access" position, wherein each hatch (54) can at least pivot towards the front and rear of the associated gantry (52) around a generally horizontal axis, to its "blocking" position, wherein said pivoting is blocked at least in the direction of the rear of said gantry (2), and vice versa.

3. The feed rack (1) according to claim 1 **characterised in that** the connecting means (12) include at least one first ring (14) fixed on the top of the structure (11) and disposed around the middle crosspiece (9) of the associated gantry (2), the internal diameter of said first ring (14) being strictly greater than the external diameter of said middle crosspiece (9).

4. The feed rack (1) according to claim 3 **characterised in that** the connecting means (12) include a second ring (15) identical to said first ring (14) and being disposed on the side of the second upright (8) of the associated gantry (2) and **in that** the first and second rings (14, 15) are each advantageously constituted by two half-rings (14a, 14b; 15a, 15b) assembled together.

5. The feed rack (1) according to any one of claims 1, 3 or 4 **characterised in that** the blocking means (5) include at least:
- a control lever (16) pivoting around a horizontal axis perpendicular to the row of gantries (2),
- a generally horizontal bar (17) disposed along the gantries (2), secured by one of its ends to the lower end of said control lever (16) and movable in translation along its longitudinal axis,
- a plurality of arms (18) which are generally vertical and fixed by their lower end along the bar (17), each arm (18) being removably secured to the hatch (4) of one of the gantries (2), and
- a stop (19) arranged to be fixed to the ground on the rear side of each gantry (2) substantially directly below the second upright (8) of the latter.

6. The feed rack (1) according to claims 4 and 5 **characterised in that** the upper end of each arm (18) is provided with a hook (20) capable of pivoting to cooperate with the top of the first ring (14), the hook (20) being associated with a torsion spring tending to maintain cooperation between said hook (20) and the top of said first ring (14).

7. The feed rack (1) according to any one of claims 1, 3 to 7 **characterised in that** it includes a plate (21) arranged to be fixed to the ground of the stable along the trough (A) and on which the gantries (2), the end post (10) and the blocking means (5) are fixed.

8. The feed rack (51) according to claim 2 **characterised in that** the blocking means (55) include at least:
- a control lever (64) pivoting around a vertical axis parallel to the row of gantries (52),
- a generally horizontal bar (65) disposed along the gantries (52) at the upper crosspiece (57), secured by one of its ends to one of the ends of said control lever (64) and movable in translation along its longitudinal axis,
- a plurality of arms (66) fixed by one of their ends along the bar (65), each arm (66) being removably secured by its other end to the second upright (60) of one of the gantries (2), and
- a stop (67) arranged to be fixed relative to the ground, or where appropriate on the lower bar (62), on the rear side of each gantry (52).

9. The feed rack (51) according to any one of claims 1 or 8 **characterised in that** it includes a plate (62) arranged to be fixed on the ground of the stable along the trough and on which are fixed the gantries (52) and the end post (58).
